# EUROPÄISCHE PATENTSCHRIFT

(11) **EP 2 678 560 B1**
(45) Veröffentlichungstag und Bekanntmachung des Hinweises auf die Patenterteilung: **12.11.2014**
(21) Anmeldenummer: 11802764.8
(22) Anmeldetag: 28.12.2011
(51) Int. Cl.: F03G 6/00

(54) **SOLARTHERMISCHE ENERGIEERZEUGUNGSANLAGE UND VERFAHREN ZUR ENERGIEGEWINNUNG MITTELS EINER SOLARTHERMISCHEN ENERGIEERZEUGUNGSANLAGE**
SOLARTHERMAL ENERGY GENERATION PLANT AND METHOD FOR ENERGY PRODUCTION BY MEANS OF A SOLARTHERMAL ENERGY GENERATION PLANT
INSTALLATION DE PRODUCTION D'ÉNERGIE HÉLIOTHERMIQUE ET PROCÉDÉ DE PRODUCTION D'ÉNERGIE À L'AIDE D'UNE INSTALLATION HÉLIOTHERMIQUE

(30) Priorität: 25.02.2011 DE 102011000946
(43) Veröffentlichungstag der Anmeldung: 01.01.2014
(73) Patentinhaber: Mitsubishi Hitachi Power Systems Europe GmbH, 47059 Duisburg (DE)
(72) Erfinder: STÖVER, Brian, 45665 Recklinghausen (DE); BERGINS, Christian, 45711 Datteln (DE); KLEBES, Jürgen, 46487 Wesel (DE); JOORMANN, Marinus, 47059 Duisburg (DE)
(74) Vertreter: Viering, Jentschura & Partner Patent- und Rechtsanwälte
(86) Internationale Anmeldenummer: PCT/EP2011/074171
(87) Internationale Veröffentlichungsnummer: WO 2012/113483

(56) Entgegenhaltungen:
- WO-A1-2010/082206
- DE-A1-102009 056 707
- MUELLER M ET AL: "SOLARE FARMKRAFTWERKE UND DIREKTVERDAMPFUNG IN KOLLEKTOREN", FORSCHUNGSVERBUND SONNENENERGIE, XX, XX, 31. Dezember 1993 (1993-12-31), Seiten 57-64, XP000647082,

## Beschreibung

Die Erfindung betrifft eine solarthermische Energieerzeugungsanlage umfassend ein Wasser als Wärmeträgermedium verwendendes erstes Solarfeld, ein dem ersten Solarfeld nachgeschalteter Wasserabscheider und eine Hochdruckturbine.

Ferner betrifft die Erfindung ein Verfahren zur Energiegewinnung mittels einer solarthermischen Energieerzeugungsanlage, bei dem in einem Wasser als Wärmeträgermedium verwendenden ersten Solarfeld Dampf erzeugt wird, der in dem Solarfeld erzeugte Dampf einem Wasserabscheider zugeführt wird, in welchem dem Dampf ein Wasseranteil entzogen wird, und der aus dem Wasserabscheider austretende Dampf einer Hochdruckturbine zugeführt wird.

Solarthermische Energieerzeugungsanlagen, wie die aus der DE 10 2009 056707 A1 bekannt, mit einer linienfokussierenden Solartechnologie, wie beispielsweise eine Parabolrinnen-Technologie oder eine Fresnel-Technologie, werden üblicherweise derart betrieben, dass ein Thermoöl ein Solarfeld durchströmt, das Thermoöldurch die einströmende Sonnenenergie in dem Solarfeld erhitzt wird und dieses erhitzte Thermoöl anschließend außerhalb des Solarfeldes dafür verwendet wird, Wasser in einen dampfförmigen Zustand zu überführen, um diesen Dampf einer Turbine oder mehrerer Turbinen zur Energieerzeugung zuzuführen. Dieses Verfahren ist jedoch durch die Verwendung des Thermoöls und des dafür notwendigen Kreislaufes aufwendig und teuer.

Um dieses Problem zu lösen, wurden solarthermische Energieerzeugungsanlagen entwickelt, bei welchen kein Thermoöl als Wärmeträgermedium in dem Solarfeld verwendet wird sondern Wasser, welches unmittelbar im Solarfeld derart erhitzt wird, dass es in einen dampfförmigen Zustand, insbesondere in Sattdampf, überführt wird und nach passieren eines Wasserabscheiders unmittelbar der Energiegewinnung, d .h. der nachfolgenden Hochdruckturbine, zugeführt wird. Dadurch, dass hierbei kein eigener Kreislauf für das Thermoöl als Wärmeträgermedium mehr notwendig ist, kann die Anlagengröße wesentlich reduziert werden, was wiederum zu einer Senkung der Kosten führt. Nachteilig bei den bisher bekannten solarthermischen Energieerzeugungsanlagen mit Solarfeldern, welche Wasser als Wärmeträgermedium verwenden, ist jedoch der bisher relativ geringe zu erreichende Wirkungsgrad zur Energieerzeugung.

Aufgabe der Erfindung ist es daher, eine Lösung zu schaffen, mittels welcher der Wirkungsgrad von Wasser als Wärmeträgermedium verwendenden solarthermischen Energieerzeugungsanlagen erhöht werden kann.

Bei einer solarthermischen Energieerzeugungsanlage der eingangs näher bezeichneten Art erfolgt die Lösung der Aufgabe erfindungsgemäß dadurch, dass zwischen dem Wasserabscheider und der Hochdruckturbine ein erster Überhitzer zum Überhitzen des aus dem Wasserabscheider austretenden Dampfes angeordnet ist.

Bei einem Verfahren der eingangs näher bezeichneten Art erfolgt die Lösung der Aufgabe erfindungsgemäß dadurch, dass der Dampf vor Eintritt in die Hochdruckturbine einem ersten Überhitzer zugeführt wird, in welchem der aus dem Wasserabscheider austretende Dampf überhitzt wird.

Zweckmäßige Ausgestaltungen und vorteilhafte Weiterbildungen der Erfindung sind in den Unteransprüchen angegeben.

Durch das Vorsehen eines ersten Überhitzers vor Eintritt des Dampfes in die Hochdruckturbine wird der als Sattdampf in den Überhitzer eintretende Dampf erhitzt, insbesondere überhitzt, und in einen sogenannten Frischdampf überführt, wobei der Frischdampf eine höhere Temperatur und einen geringeren Feuchtigkeitsgrad aufweist als der in den Überhitzer eintretende Sattdampf. Hierdurch kann der Wirkungsgrad zur Energieerzeugung in der nachfolgenden Hochdruckturbine wesentlich erhöht werden. Durch die Überhitzung des Sattdampfes in dem ersten Überhitzer kann zudem vermieden werden, dass an den Schaufeln der nachfolgenden Hochdruckturbine eine Tropfenerosion durch den in die Hochdruckturbine eingeführten Dampf stattfindet, wodurch Verschleißerscheinungen an der Hochdruckturbine reduziert werden können und die Lebensdauer der Hochdruckturbine dadurch erhöht werden kann.

Nach einer vorteilhaften Ausgestaltung der Erfindung ist der Hochdruckturbine eine Mitteldruckturbine oder eine Niederdruckturbine nachgeschaltet, wobei zwischen der Hochdruckturbine und der Mitteldruckturbine oder zwischen der Hochdruckturbine und der Niederdruckturbine ein zweiter Überhitzer angeordnet ist. Der aus der Hochdruckturbine austretende Dampf kann somit vor Eintritt in eine nachfolgende Mitteldruckturbine oder eine nachfolgende Hochdruckturbine einem zweiten Überhitzer zugeführt werden, so dass der Dampf nach Verlassen der Hochdruckturbine noch einmal überhitzt wird, wodurch seine Temperatur wieder vor Eintritt in die nachfolgende Mitteldruckturbine oder Niederdruckturbine erhöht wird und dadurch der Wirkungsgrad der gesamten Energieerzeugungsanlage weiter erhöht werden kann.

Alternativ ist es bevorzugt vorgesehen, dass der Hochdruckturbine eine Mitteldruckturbine und der Mitteldruckturbine eine Niederdruckturbine nachgeschaltet ist, wobei zwischen der Hochdruckturbine und der Mitteldruckturbine ein zweiter Überhitzer und zwischen der Mitteldruckturbine und der Niederdruckturbine ein dritter Überhitzer angeordnet ist. Der aus der Hochdruckturbine austretende Dampf kann somit vor Eintritt in die der Hochdruckturbine nachfolgenden Mitteldruckturbine in einem zweiten Überhitzer überhitzt werden und nach dem Verlassen der Mitteldruckturbine und vor Eintritt in die nachfolgende Niederdruckturbine in einem dritten Überhitzer ein weiteres Mal überhitzt werden. Hierdurch kann der Wirkungsgrad der Energieerzeugungsanlage weiter gesteigert werden.

Weiter ist es alternativ möglich, dass der Hochdruckturbine ein thermischer Speicher oder eine Meerwasserentsalzungsanlage oder eine Adsorptionskältemaschine nachgeschaltet ist, wobei zwischen der Hochdruckturbine und dem thermischen Speicher oder der Meerwasserentsalzungsanlage oder der Adsorptionskältemaschine ein zweiter Überhitzer angeordnet ist. Der die Hochdruckturbine verlassende Dampf kann somit unmittelbar oder nach Passieren einer nachfolgenden Mitteldruckturbine und/oder Niederdruckturbine einem thermischen Speicher oder einer Meerwasserentsalzungsanlage oder einer Adsorptionskältemaschine zugeführt werden und hier weiter genutzt werden. Der thermische Speicher kann beispielsweise ein Dampfspeicher, ein Warmwasserspeicher, ein Öl- oder Salzspeicher sein. Fern kann der Dampf auch zur Einspeisung in ein Fernwärme- bzw. Prozesswärmesystem genutzt werden.

Gemäß einer weiter vorteilhaften Ausgestaltung der Erfindung ist der erste Überhitzer und/oder der zweite Überhitzer und/oder der dritte Überhitzer ein Dampf-Dampf-Wärmetauscher. Bei dem Dampf-Dampf-Wärmetauscher wird der Dampf vor Eintritt in die Hochdruckturbine und/oder Mitteldruckturbine und/oder Niederdruckturbine mit einem Dampf überhitzt. Der Dampf-Dampf-Wärmetauscher ist vorzugsweise als Kondensator ausgelegt.

Zur Erzeugung des zusätzlichen Dampfes kann ein Zusatzsolarfeld vorgesehen sein, mittels welchem der Dampf-Dampf-Wärmetauscher betreibbar ist. In dem Zusatzsolarfeld, bei welchem ebenfalls Wasser als Wärmeträgermedium verwendet wird, wird Dampf erzeugt, welcher eine höhere Temperatur und einen höheren Druck aufweist, als der aus dem ersten Solarfeld austretende Dampf, so dass mittels des mit dem Zusatzsolarfeld erzeugten Dampfes der aus dem ersten Solarfeld austretende Dampf überhitzt werden kann, wodurch die Wirtschaftlichkeit des Verfahrens und der Energieerzeugungsanlage weiter erhöht werden kann.

Weiter ist es möglich, dass der erste Überhitzer und/oder der zweite Überhitzer und/oder der dritte Überhitzer ein zweites Solarfeld ist, so dass der Dampf vor Eintritt in die Hochdruckturbine und/oder Mitteldruckturbine und/oder Niederdruckturbine durch ein zweites Solarfeld geführt wird, in welchem der Dampf überhitzt wird und dadurch seine Temperatur vor Eintritt in die nachfolgende Hochdruckturbine und/oder Mitteldruckturbine und/oder Niederdruckturbine erhöht wird.

Ferner ist es bevorzugt vorgesehen, dass dem als Dampf-Dampf-Wärmetauscher ausgebildete erste Überhitzer und/oder zweite Überhitzer und/oder dritte Überhitzer und/oder dem als zweites Solarfeld ausgebildete erste Überhitzer und/oder zweite Überhitzer und/oder dritte Überhitzer eine Brennkammer nachgeschaltet ist, so dass nachdem der Dampf einen der Überhitzer verlassen hat und bevor er in eine Hochdruckturbine und/oder Mitteldruckturbine und/oder Niederdruckturbine geführt wird, der Dampf durch eine Brennkammer geleitet wird und dort weiter erhitzt, insbesondere überhitzt, wird, wobei mittels der Brennkammer die Temperatur des Dampfes vor Eintritt in die Hochdruckturbine und/oder Mitteldruckturbine und/oder Niederdruckturbine sehr genau geregelt und damit der Dampf konditioniert werden kann. Als Brennstoff in der Brennkammer kann beispielsweise Gas, Öl, Kohle, Biomasse oder Biogas verwendet werden.

Weiter ist es auch möglich, dass der erste Überhitzer und/oder der zweite Überhitzer und/oder der dritte Überhitzer selber als eine Brennkammer ausgebildet sind.

Nachfolgend wird die Erfindung unter Bezugnahme auf die anliegenden Zeichnungen anhand bevorzugter Ausführungsformen näher erläutert.

Es zeigen:
- Fig. 1: eine schematische Darstellung einer solarthermischen Energieerzeugungsanlage gemäß der Erfindung in einer ersten Ausführungsform,
- Fig. 2: eine schematische Darstellung einer solarthermischen Energieerzeugungsanlage gemäß der Erfindung in einer zweiten Ausführungsform,
- Fig. 3: eine schematische Darstellung einer solarthermischen Energieerzeugungsanlage gemäß der Erfindung in einer dritten Ausführungsform,
- Fig. 4: eine schematische Darstellung einer solarthermischen Energieerzeugungsanlage gemäß der Erfindung in einer vierten Ausführungsform,
- Fig. 5: eine schematische Darstellung einer solarthermischen Energieerzeugungsanlage gemäß der Erfindung in einer fünften Ausführungsform,
- Fig. 6: eine schematische Darstellung einer solarthermischen Energieerzeugungsanlage gemäß der Erfindung in einer sechsten Ausführungsform,
- Fig. 7: eine schematische Darstellung einer solarthermischen Energieerzeugungsanlage gemäß der Erfindung in einer siebten Ausführungsform,
- Fig. 8: eine schematische Darstellung einer solarthermischen Energieerzeugungsanlage gemäß der Erfindung in einer achten Ausführungsform,
- Fig. 9: eine schematische Darstellung einer solarthermischen Energieerzeugungsanlage gemäß der Erfindung in einer neunten Ausführungsform,
- Fig. 10: eine schematische Darstellung einer solarthermischen Energieerzeugungsanlage gemäß der Erfindung in einer zehnten Ausführungsform,
- Fig. 11: eine schematische Darstellung einer solarthermischen Energieerzeugungsanlage gemäß der Erfindung in einer elften Ausführungsform,
- Fig. 12: eine schematische Darstellung einer solarthermischen Energieerzeugungsanlage gemäß der Erfindung in einer zwölften Ausführungsform,
- Fig. 13: eine schematische Darstellung einer solarthermischen Energieerzeugungsanlage gemäß der Erfindung in einer dreizehnten Ausführungsform,
- Fig. 14: eine schematische Darstellung einer solarthermischen Energieerzeugungsanlage gemäß der Erfindung in einer vierzehnten Ausführungsform,
- Fig. 15: eine schematische Darstellung einer solarthermischen Energieerzeugungsanlage gemäß der Erfindung in einer fünfzehnten Ausführungsform, und
- Fig. 16: eine schematische Darstellung einer solarthermischen Energieerzeugungsanlage gemäß der Erfindung in einer sechzehnten Ausführungsform.

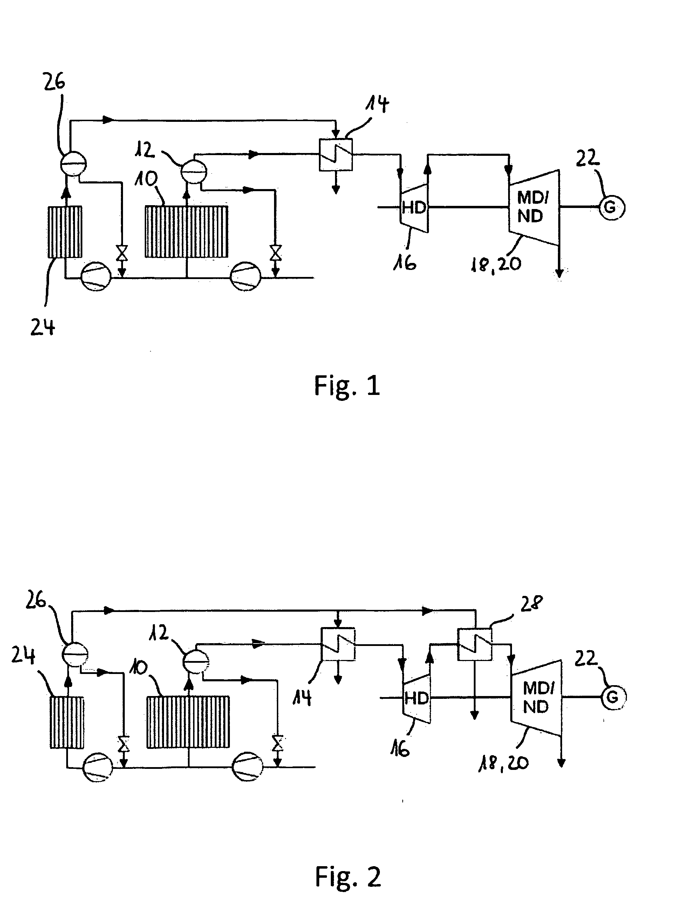

Fig. 1 zeigt eine schematische Darstellung einer erfindungsgemäßen solarthermischen Energieerzeugungsanlage gemäß einer ersten Ausführungsform. Hierbei wird in einem Wasser als Wärmeträgermedium verwendenden ersten Solarfeld 10 Dampf in Form von Sattdampf erzeugt und nach Verlassen des ersten Solarfeldes 10 einem ersten Wasserabscheider 12 zugeführt, bei welchem in dem Dampf noch enthaltendes Wasser abgespalten wird und dem ersten Solarfeld 10 wieder zugeführt wird. Der Dampf wird anschließend einem ersten Überhitzer 14 zugeführt, welcher bei der hier gezeigten Ausführungsform als ein Dampf-Dampf-Wärmetauscher ausgebildet ist. In dem ersten Überhitzer 14 wird der Dampf überhitzt, so dass der in den Überhitzer 14 eintretende Sattdampf in einen sogenannten Frischdampf mit einer höheren Temperatur und einem geringeren Feuchtigkeitsgrad als der Sattdampf überführt wird. Anschließend wird der Dampf einer Hochdruckturbine 16 und einer Mitteldruckturbine oder Niederdruckturbine 18, 20 zugeführt, welche mit einem Generator 22 verbunden sind. Der als Dampf-Dampf-Wärmetauscher ausgebildete erste Überhitzer 14 wird mit einem in einem Zusatzsolarfeld 24 erzeugten Dampf (Sattdampf) betrieben, wobei der in dem Zusatzsolarfeld 24 erzeugte Dampf eine höhere Temperatur und einen höheren Druck aufweist als der in dem ersten Solarfeld 10 erzeugte Dampf. Vorzugsweise weist der in dem ersten Solarfeld 10 erzeugte Dampf einen Druck von 60 bar und der in dem Zusatzsolarfeld 24 erzeugte Dampf einen Druck von 80 bar auf. Zwischen dem Zusatzsolarfeld 24 und dem ersten Überhitzer 14 ist ein zweiter Wasserabscheider 26 angeordnet, in welchem Wasser aus dem das Zusatzsolarfeld verlassenden Dampf abgespalten wird und dem Zusatzsolarfeld 24 wieder zugeführt wird.

Die in Fig. 2 gezeigte zweite Ausführungsform entspricht im Wesentlichen der in Fig. 1 gezeigten Ausführungsform, wobei hierbei zusätzlich zwischen der Hochdruckturbine 16 und der Mitteldruckturbine 18 oder Hochdruckturbine 20 ein zweiter Überhitzer 28, welcher als Dampf-Dampf-Wärmetauscher ausgebildet ist, vorgesehen ist. Der zweite Überhitzer 28 wird ebenfalls mit in dem Zusatzsolarfeld 24 erzeugtem Dampf (Sattdampf) betrieben, um den aus der Hochdruckturbine 16 austretenden Dampf vor Eintritt in die Mitteldruckturbine 18 oder die Niederdruckturbine 20 erneut zu überhitzen.

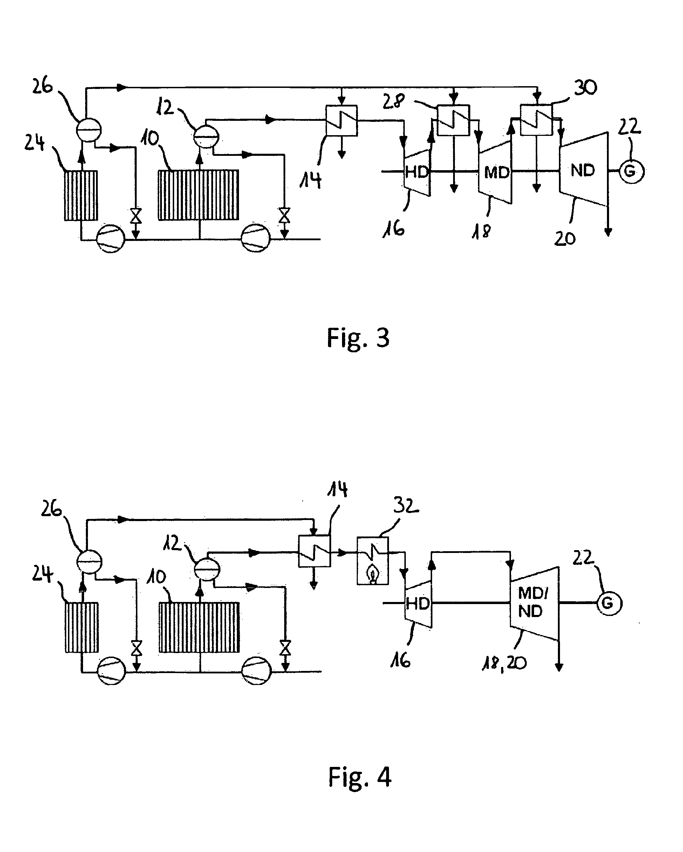

Die in Fig. 3 gezeigte dritte Ausführungsform entspricht im Wesentlichen der in Fig. 2 gezeigten zweiten Ausführungsform, wobei hierbei eine Mitteldruckturbine 18 und eine Niederdruckturbine 20 vorgesehen ist und zwischen der Mitteldruckturbine 18 und der Niederdruckturbine 20 ein dritter Überhitzer 30 in Form eines Dampf-Dampf-Wärmetauschers ausgebildet ist, der ebenfalls mit in dem Zusatzsolarfeld 24 erzeugtem Dampf (Sattdampf) betrieben wird, um den die Mitteldruckturbine 18 verlassenden Dampf vor Eintritt in die Niederdruckturbine 20 erneut zu überhitzen. Die in Fig. 4 gezeigte vierte Ausführungsform entspricht im Wesentlichen der in Fig. 1 gezeigten ersten Ausführungsform, wobei hierbei zusätzlich dem ersten Überhitzer 14 eine Brennkammer 32 unmittelbar nachgeschaltet ist, wobei mittels der Brennkammer 32 der aus dem ersten Überhitzer 14 austretende Dampf vor Eintritt in die Hochdruckturbine 16 konditioniert werden kann.

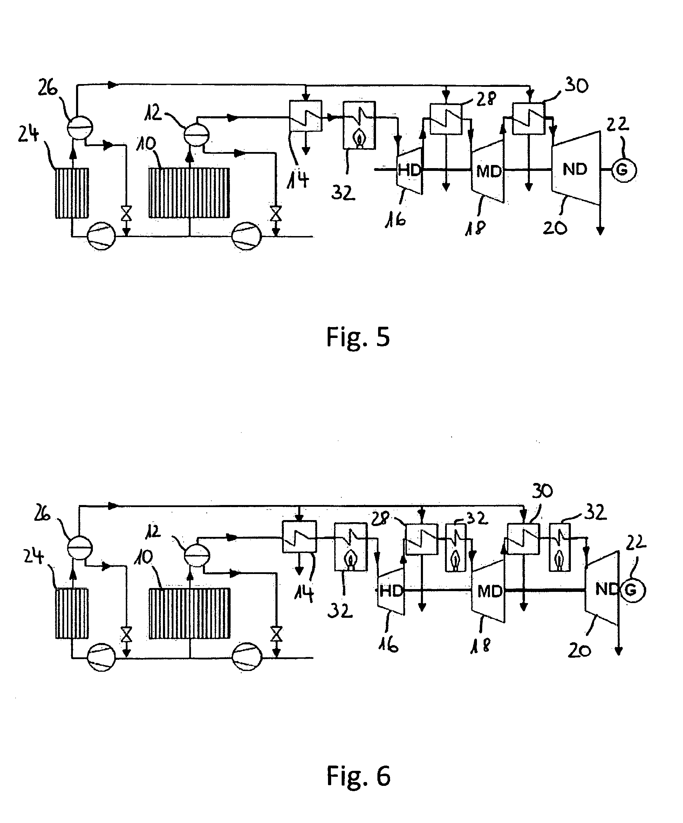

Die in Fig. 5 gezeigte fünfte Ausführungsform entspricht im Wesentlichen der in Fig. 3 gezeigten dritten Ausführungsform, wobei auch hierbei, dem ersten Überhitzer 14 eine Brennkammer 32 nachgeschaltet ist.

Die in Fig. 6 gezeigte sechste Ausführungsform entspricht im Wesentlichen der in Fig. 5 gezeigten fünften Ausführungsform, wobei hierbei zusätzlich dem zweiten Überhitzer 28 und dem dritten Überhitzer 30 jeweils eine Brennkammer 32 nachgeschaltet ist.

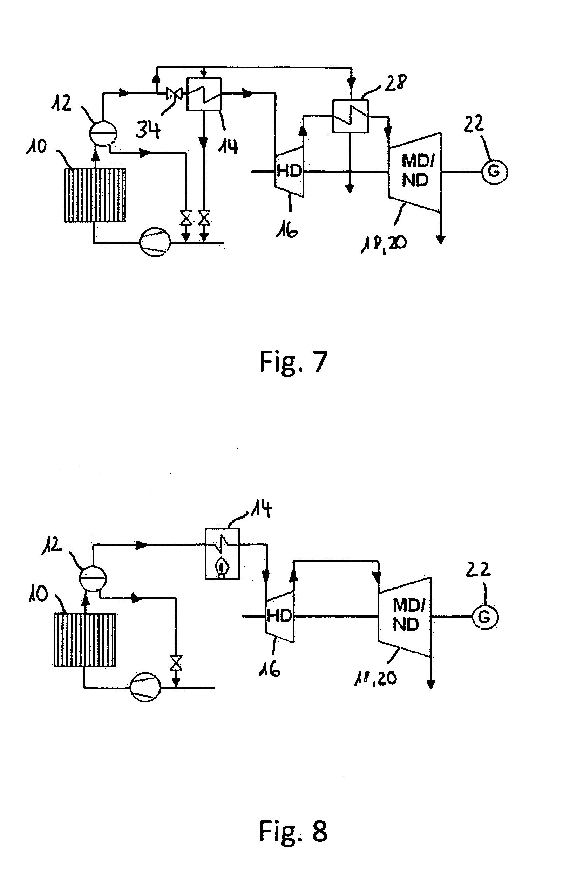

Bei der in Fig. 7 gezeigten siebten Ausführungsform ist zwischen dem Wasserabscheider 12 und der Hochdruckturbine 15 ein erster Überhitzer 14 in Form eines Dampf-Dampf-Wärmetauschers angeordnet. Der erste Überhitzer 14 wird bei dieser Ausführungsform mit Dampf aus dem ersten Solarfeld 10 betrieben, indem der Dampf nach Verlassen des Wasserabscheiders 12 aufgespalten wird in Dampf, welcher in dem ersten Überhitzer 14 überhitzt wird und anschließend einer Hochdruckturbine 16 zugeführt wird, und Dampf, welcher zum Überhitzen verwendet wird. Nach der Abzweigung und vor Eintritt in den ersten Überhitzer 14 ist eine Drosselung 34 in Form einer isenthalpen Drosselung vorgesehen, bei welcher die Temperatur des Dampfes vor Eintritt in den ersten Überhitzer 14 abgesenkt wird. In dem ersten Überhitzer 14 selber findet dann bei gleichbleibender Enthalpie eine Druckabsenkung statt, wodurch wiederum die Temperatur des Dampfes erhöht wird, welcher anschließend der Hochdruckturbine 16 zugeführt wird. Zwischen der Hochdruckturbine 16 und der Mitteldruckturbine 18 oder Niederdruckturbine 20 ist ein zweiter Überhitzer 28 vorgesehen, welcher ebenfalls als Dampf-Dampf-Wärmetauscher ausgebildet ist und mit dem von dem ersten Solarfeld 10 abgezweigten Dampf zur Überhitzung des aus der Hochdruckturbine 16 austretenden Dampfes betrieben wird.

Die in Fig. 8 gezeigte achte Ausführungsform weist einen in Form einer Brennkammer ausgebildeten ersten Überhitzer 14 auf. Ein Zusatzsolarfeld ist bei dieser Ausführungsform nicht notwendig.

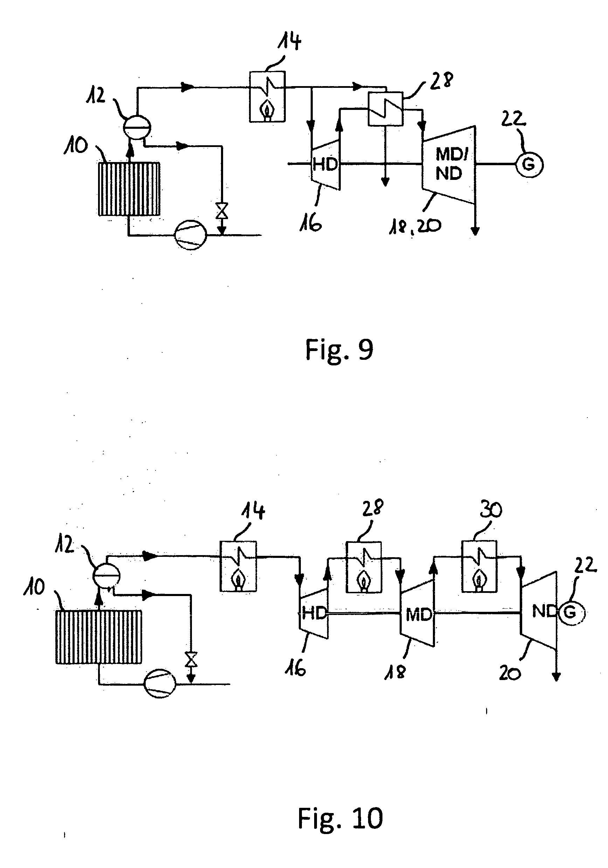

Die in Fig. 9 gezeigte neunte Ausführungsform weist ebenfalls einen in Form einer Brennkammer ausgebildeten ersten Überhitzer 14 auf. Zusätzlich ist zwischen der Hochdruckturbine 16 und der Mitteldruckturbine 18 oder der Niederdruckturbine 20 ein zweiter Überhitzer 28 in Form eines Dampf-Dampf-Wärmetauschers vorgesehen. Dieser zweite Überhitzer 28 wird mit einem von dem aus dem ersten Überhitzer 14 austretenden Dampf abgezweigten Dampf betrieben, so dass der aus der Hochdruckturbine 16 austretende Dampf vor Eintritt in die Mitteldruckturbine 18 oder Niederdruckturbine 20 mit einem aus dem ersten Überhitzer 14 austretenden überhitzten Dampf überhitzt wird.

Bei der in Fig. 10 gezeigten zehnten Ausführungsform ist eine Hochdruckturbine 16, eine Mitteldruckturbine 18 und eine Niederdruckturbine 20 vorgesehen, wobei der Dampf vor Eintritt in die Hochdruckturbine 16 in einem ersten Überhitzer 14 überhitzt wird, vor Eintritt in die Mitteldruckturbine 18 in einem zweiten Überhitzer 28 überhitzt wird, und vor Eintritt in die Niederdruckturbine 20 in einem dritten Überhitzer 30 überhitzt wird. Dabei sind der erste Überhitzer 14, der zweite Überhitzer 28 und der dritte Überhitzer 30 jeweils in Form einer Brennkammer ausgebildet.

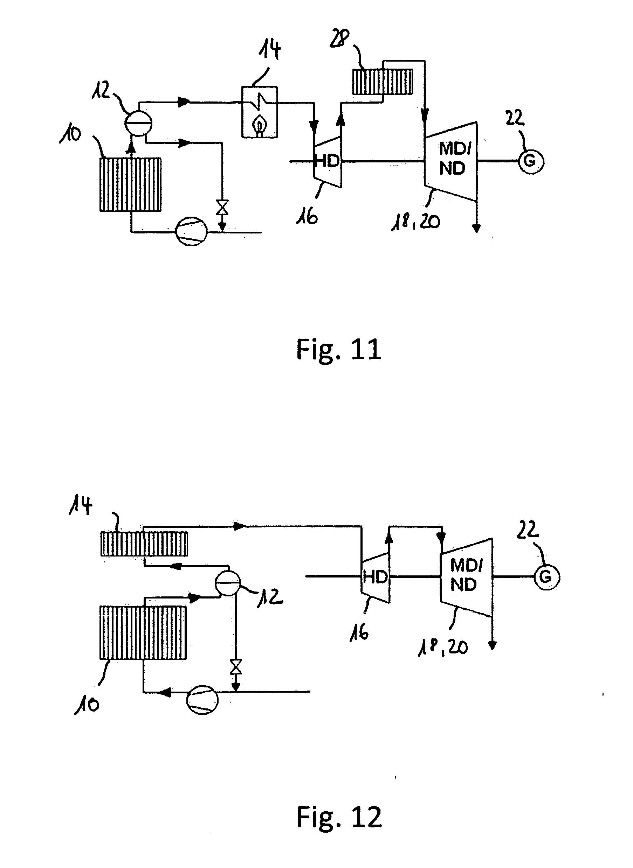

Fig. 11 zeigt eine elfte Ausführungsform, bei welcher der erste Überhitzer 14 als eine Brennkammer ausgebildet ist und zwischen der Hochdruckturbine 16 und der Mitteldruckturbine 18 oder Niederdruckturbine 20 ein zweiter Überhitzer 28 in Form eines zweiten Solarfeldes ausgebildet ist. Der aus der Hochdruckturbine 16 austretende Dampf wird somit bei dieser Ausführungsform vor Eintritt in die Mitteldruckturbine 18 oder die Niederdruckturbine 20 durch einen zweiten Überhitzer 28 in Form eines zweiten Solarfeldes geführt, in welchem der Dampf überhitzt wird.

Fig. 12 zeigt eine zwölfte Ausführungsform, bei welcher der erste Überhitzer 14 in Form eines zweiten Solarfeldes ausgebildet ist, so dass der aus dem Wasserabscheider 12 austretende Dampf vor Eintritt in die Hochdruckturbine 16 einem zweiten Solarfeld zugeführt und dort überhitzt wird.

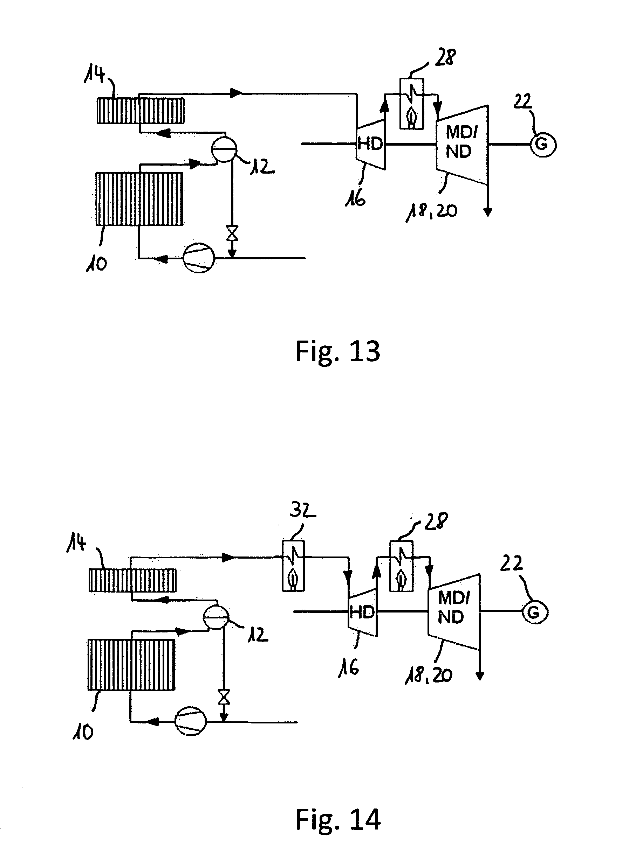

Die in Fig. 13 gezeigte dreizehnte Ausführungsform entspricht im Wesentlichen der in Fig. 12 gezeigten zwölften Ausführungsform, wobei hierbei zusätzlich zwischen der Hochdruckturbine 16 und der Mitteldruckturbine 18 oder der Niederdruckturbine 20 ein zweiter Überhitzer 28 in Form einer Brennkammer vorgesehen ist.

Die in Fig. 14 gezeigte vierzehnte Ausführungsform entspricht im Wesentlichen der in Fig. 13 gezeigten dreizehnten Ausführungsform, wobei hierbei dem als zweites Solarfeld ausgebildeten ersten Überhitzer 14 eine Brennkammer 32 zur Konditionierung des aus dem ersten Überhitzer 14 austretenden Dampfes vor Eintritt in die Hochdruckturbine 16 nachgeschaltet ist.

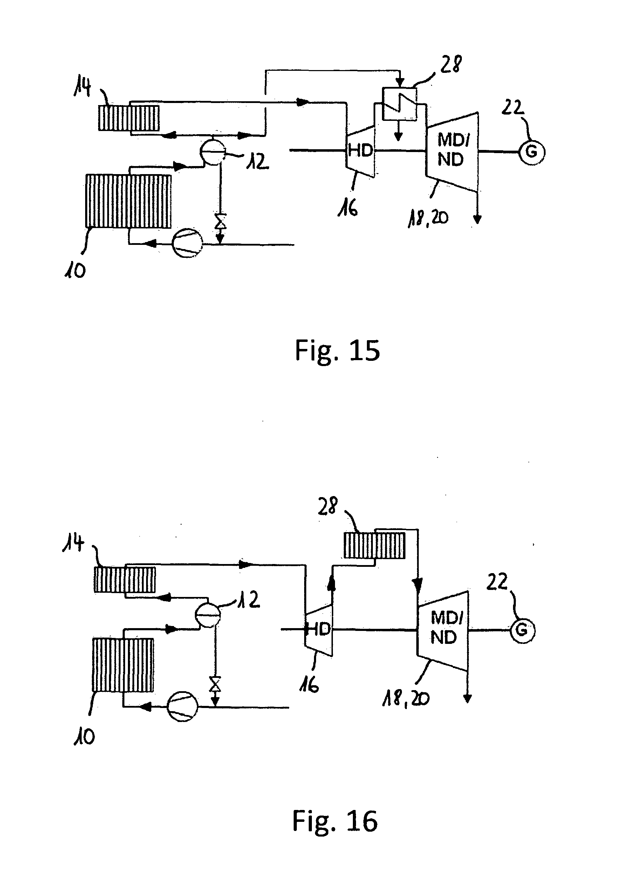

Bei der in Fig. 15 gezeigten Ausführungsform wird der Dampf nach Austritt aus dem Wasserabscheider 12 geteilt, wobei ein Teil des Dampfes einem ersten als zweites Solarfeld ausgebildeten Überhitzer 14 zugeführt wird und der anderen Teil des Dampfes einem zweiten als Dampf-Dampf-Wärmetauscher ausgebildeten zweiten Überhitzer 28 zugeführt wird, um den aus der Hochdruckturbine 16 austretenden Dampf zu überhitzen.

Die in Fig. 16 gezeigte sechzehnte Ausführungsform entspricht im Wesentlichen der in Fig. 13 gezeigten dreizehnten Ausführungsform, wobei hierbei der zweite Überhitzer 28 nicht als Brennkammer ausgebildet ist, sondern als ein weiteres zweites Solarfeld.

## Patentansprüche

1. Solarthermische Energieerzeugungsanlage, mit einem Wasser als Wärmeträgermedium verwendenden ersten Solarfeld (10),
einem dem ersten Solarfeld (10) nachgeschalteten Wasserabscheider (12), und
eine Hochdruckturbine (16),
**dadurch gekennzeichnet, dass**
zwischen dem Wasserabscheider (12) und der Hochdruckturbine (16) ein erster Überhitzer (14) zum Überhitzen des aus dem Wasserabscheider (12) austretenden Dampfes angeordnet ist.

2. Solarthermische Energieerzeugungsanlage nach Anspruch 1, **dadurch gekennzeichnet, dass** der Hochdruckturbine (16) eine Mitteldruckturbine (18) oder eine Niederdruckturbine (20) nachgeschaltet ist, wobei zwischen der Hochdruckturbine (16) und der Mitteldruckturbine (18) oder zwischen der Hochdruckturbine (16) und der Niederdruckturbine (20) ein zweiter Überhitzer (28) angeordnet ist.

3. Solarthermische Energieerzeugungsanlage nach Anspruch 1, **dadurch gekennzeichnet, dass** der Hochdruckturbine (16) eine Mitteldruckturbine (18) und der Mitteldruckturbine (18) eine Niederdruckturbine (20) nachgeschaltet ist, wobei zwischen der Hochdruckturbine (16) und der Mitteldruckturbine (18) ein zweiter Überhitzer (28) und zwischen der Mitteldruckturbine (18) und der Niederdruckturbine (20) ein dritter Überhitzer (30) angeordnet ist.

4. Solarthermische Energieerzeugungsanlage nach Anspruch 1, **dadurch gekennzeichnet, dass** der Hochdruckturbine (16) ein thermischer Speicher oder eine Meerwasserentsalzungsanlage oder eine Adsorptionskältemaschine nachgeschaltet ist, wobei zwischen der Hochdruckturbine (16) und dem thermischen Speicher oder der Meerwasserentsalzungsanlage oder der Adsorptionskältemaschine ein zweiter Überhitzer (28) angeordnet ist.

5. Solarthermische Energieerzeugungsanlage nach einem der Ansprüche 1 bis 4, **dadurch gekennzeichnet, dass** der erste Überhitzer (14) und/oder der zweite Überhitzer (28) und/oder der dritte Überhitzer (30) ein Dampf-Dampf-Wärmetauscher ist.

6. Solarthermische Energieerzeugungsanlage nach Anspruch 5, **dadurch gekennzeichnet, dass** ein Zusatzsolarfeld (24) angeordnet ist, mittels welchem der Dampf-Dampf-Wärmetauscher betreibbar ist.

7. Solarthermische Energieerzeugungsanlage nach einem der Ansprüche 1 bis 6, **dadurch gekennzeichnet, dass** der erste Überhitzer (14) und/oder der zweite Überhitzer (28) und/oder der dritte Überhitzer (30) ein zweites Solarfeld ist.

8. Solarthermische Energieerzeugungsanlage nach Anspruch 6 oder 7, **dadurch gekennzeichnet, dass** dem als Dampf-Dampf-Wärmetauscher ausgebildete erste Überhitzer (14) und/oder zweite Überhitzer (28) und/oder dritte Überhitzer (30) und/oder dem als zweites Solarfeld ausgebildete erste Überhitzer (14) und/oder zweite Überhitzer (28) und/oder dritte Überhitzer (30) eine Brennkammer (32) nachgeschaltet ist.

9. Solarthermische Energieerzeugungsanlage nach einem der Ansprüche 1 bis 7, **dadurch gekennzeichnet, dass** der erste Überhitzer (14) und/oder der zweite Überhitzer (28) und/oder der dritte Überhitzer (30) eine Brennkammer ist.

10. Verfahren zur Energiegewinnung mittels einer solarthermischen Energieerzeugungsanlage, bei dem in einem Wasser als Wärmeträgermedum verwendenden ersten Solarfeld (10) Dampf erzeugt wird, der in dem ersten Solarfeld (10) erzeugte Dampf einem Wasserabscheider (12) zugeführt wird, in welchem dem Dampf ein Wasseranteil entzogen wird, und der aus dem Wasserabscheider (12) austretende Dampf einer Hochdruckturbine (16) zugeführt wird,
**dadurch gekennzeichnet, dass**
der Dampf vor Eintritt in die Hochdruckturbine (16) einem ersten Überhitzer (14) zugeführt wird, in welchem der aus dem Wasserabscheider (12) austretende Dampf überhitzt wird.

## Claims

1. A solar thermal energy generation plant, comprising
a first solar array (10) using water as a heat transfer medium,
a water separator (12) arranged downstream of the first solar array (10), and
a high-pressure turbine (16),
**characterized in that**
a first superheater (14) for superheating the steam leaving the water separator (12) is arranged between the water separator (12) and the high-pressure turbine (16).

2. The solar thermal energy generation plant according to claim 1, **characterized in that** a medium-pressure turbine (18) or a low-pressure turbine (20) is arranged downstream of the high-pressure turbine (16), a second superheater (28) being arranged between the high-pressure turbine (16) and the medium-pressure turbine (18) or between the high-pressure turbine (16) and the low-pressure turbine (20).

3. The solar thermal energy generation plant according to claim 1, **characterized in that** a medium-pressure turbine (18) is arranged downstream of the high-pressure turbine (16) and a low-pressure turbine (20) is arranged downstream of the medium-pressure turbine (18), a second superheater (28) being arranged between the high-pressure turbine (16) and the medium-pressure turbine (18) and a third superheater (30) being arranged between the medium-pressure turbine (18) and the low-pressure turbine (20).

4. The solar thermal energy generation plant according to claim 1, **characterized in that** a thermal storage unit or a seawater desalination plant or an adsorption refrigeration machine is arranged downstream of the high-pressure turbine (16), a second superheater (28) being arranged between the high-pressure turbine (16) and the thermal storage unit or the seawater desalination plant or the adsorption refrigeration machine.

5. The solar thermal energy generation plant according to any of claims 1 to 4, **characterized in that** the first superheater (14) and/or the second superheater (28) and/or the third superheater (30) is a steam-steam heat exchanger.

6. The solar thermal energy generation plant according to claim 5, **characterized in that** an additional solar array (24) is provided, by means of which the steam-steam heat exchanger can be operated.

7. The solar thermal energy generation plant according to any of claims 1 to 6, **characterized in that** the first superheater (14) and/or the second superheater (28) and/or the third superheater (30) is a second solar array.

8. The solar thermal energy generation plant according to claim 6 or 7, **characterized in that** a combustion chamber (32) is arranged downstream of the first superheater (14) and/or second superheater (28) and/or third superheater (30) configured as a steam-steam heat exchanger and/or of the first superheater (14) and/or second superheater (28) and/or third superheater (30) configured as a second solar array.

9. The solar thermal energy generation plant according to any of claims 1 to 7, **characterized in that** the first superheater (14) and/or the second superheater (20) and/or the third superheater (30) is a combustion chamber.

10. A method for obtaining energy by means of a solar thermal energy generation plant, in which steam is generated in a first solar array (10) using water as a heat transfer medium, the steam generated in the first solar array (10) is fed to a water separator (12) in which a fraction of water is extracted from the steam, and the steam leaving the water separator (12) is fed to a high-pressure turbine (16), **characterized in that**
the steam, prior to entering the high-pressure turbine (16), is fed to a first superheater (14) in which the steam leaving the water separator (12) is superheated.

## Revendications

1. Installation de génération d'énergie héliothermique, comprenant un premier panneau solaire (10) utilisant de l'eau comme fluide caloporteur,
un séparateur d'eau (12) disposé en aval du premier panneau solaire (10), et
une turbine haute pression (16),
**caractérisée en ce que**
un premier surchauffeur (14) pour la surchauffe de la vapeur sortant du séparateur d'eau (12) est disposé entre le séparateur d'eau (12) et la turbine haute pression (16).

2. Installation de génération d'énergie héliothermique selon la revendication 1, **caractérisée en ce qu'**une turbine moyenne pression (18) ou une turbine basse pression (20) est disposée en aval de la turbine haute pression (16), un deuxième surchauffeur (28) étant disposé entre la turbine haute pression (16) et la turbine moyenne pression (18) ou entre la turbine haute pression (16) et la turbine basse pression (20).

3. Installation de génération d'énergie héliothermique selon la revendication 1, **caractérisée en ce qu'**une turbine moyenne pression (18) est disposée en aval de la turbine haute pression (16) et une turbine basse pression (20) en aval de la turbine moyenne pression (18), un deuxième surchauffeur (28) étant disposé entre la turbine haute pression (16) et la turbine moyenne pression (18) et un troisième surchauffeur (30) entre la turbine moyenne pression (18) et la turbine basse pression (20).

4. Installation de génération d'énergie héliothermique selon la revendication 1, **caractérisée en ce qu'**un accumulateur thermique ou une installation de dessalage de l'eau de mer ou un refroidisseur à adsorption est disposé en aval de la turbine haute pression (16), un deuxième surchauffeur (28) étant disposé entre la turbine haute pression (16) et l'accumulateur thermique ou l'installation de dessalage de l'eau de mer ou le refroidisseur à adsorption.

5. Installation de génération d'énergie héliothermique selon l'une des revendications 1 à 4, **caractérisée en ce que** le premier surchauffeur (14) et/ou le deuxième surchauffeur (28) et/ou le troisième surchauffeur (30) sont chacun un échangeur de chaleur vapeur- vapeur.

6. Installation de génération d'énergie héliothermique selon la revendication 5, **caractérisée en ce qu'**un panneau solaire supplémentaire (24) est monté, au moyen duquel l'échangeur de chaleur vapeur-vapeur peut être mis en service.

7. Installation de génération d'énergie héliothermique selon l'une des revendications 1 à 6, **caractérisée en ce que** le premier surchauffeur (14) et/ou le deuxième surchauffeur (28) et/ou le troisième surchauffeur (30) sont chacun un deuxième panneau solaire.

8. Installation de génération d'énergie héliothermique selon la revendication 6 ou 7, **caractérisée en ce qu'**une chambre de combustion (32) est disposée en aval du premier surchauffeur (14) et/ou du deuxième surchauffeur (28) et/ou du troisième surchauffeur (30) réalisés chacun comme échangeur de chaleur vapeur-vapeur, et/ou du premier surchauffeur (14) et/ou du deuxième surchauffeur (28) et/ou du troisième surchauffeur (30) réalisés chacun comme deuxième panneau solaire.

9. Installation de génération d'énergie héliothermique selon l'une des revendications 1 à 7, **caractérisée en ce que** le premier surchauffeur (14) et/ou le deuxième surchauffeur (28) et/ou le troisième surchauffeur (30) sont chacun une chambre de combustion.

10. Procédé de récupération dénergie au moyen d'une installation de génération d'énergie héliothermique, où de la vapeur est générée dans un premier panneau solaire (10) utilisant de l'eau comme fluide caloporteur, la vapeur générée dans le premier panneau solaire (10) est conduite vers un séparateur d'eau (12) où une part d'eau est extraite de la vapeur, et en ce que la vapeur sortant du séparateur d'eau (12) est conduite vers une turbine haute pression (16),
**caractérisé en ce que**
avant d'entrer dans la turbine haute pression (16), la vapeur est conduite vers un premier surchauffeur (14), où la vapeur sortant du séparateur d'eau (12) est surchauffée.
